# NEUE EUROPÄISCHE PATENTSCHRIFT

(11) **EP 1 957 692 B2**
(45) Veröffentlichungstag und Bekanntmachung des Hinweises auf die Entscheidung über den Einspruch: **29.11.2017**
(45) Hinweis auf die Patenterteilung: 11.06.2014
(21) Anmeldenummer: 06829330.7
(22) Anmeldetag: 06.12.2006
(51) Int. Cl.: C23C 22/34, C23C 22/44, C23C 22/83, B05D 7/00, B05D 7/14, C09D 5/12, C09D 5/44, C25D 13/20

(54) **NASS IN NASS VERFAHREN UND CHROMFREIE SAURE LÖSUNG ZUR KORROSIONSSCHUTZBEHANDLUNG VON STAHLOBERFLÄCHEN**
WET ON WET METHOD AND CHROME-FREE ACIDIC SOLUTION FOR THE CORROSION CONTROL TREATMENT OF STEEL SURFACES
PROCEDE HUMIDE SUR HUMIDE ET SOLUTION ACIDE EXEMPTE DE CHROME POUR TRAITEMENT PROTECTEUR CONTRE LA CORROSION DE SURFACES EN ACIER

(30) Priorität: 09.12.2005 DE 102005059314
(43) Veröffentlichungstag der Anmeldung: 20.08.2008
(60) Teilanmeldung: 14167838.3
(73) Patentinhaber: Henkel AG & Co. KGaA, 40589 Düsseldorf (DE)
(72) Erfinder: FREY, Stefan, 67146 Deidesheim (DE); CORNEN, Sophie, 40591 Düsseldorf (DE); CZIKA, Franz-Adolf, 41470 Neuss (DE); DRONIOU, Patrick, F-92700 Colombes (FR); HOHAGEN, Silvia, 42115 Wuppertal (DE); KUHM, Peter, 40724 Hilden (DE); KRÖMER, Jens, 40225 Düsseldorf (DE)
(86) Internationale Anmeldenummer: PCT/EP2006/011696
(87) Internationale Veröffentlichungsnummer: WO 2007/065645

(56) Entgegenhaltungen:
- EP-A- 1 433 877
- EP-A- 1 433 878
- EP-A1- 1 433 876
- WO-A-00/68466
- WO-A-02/10476
- WO-A-2006/071226
- DE-A1- 4 241 134
- DE-A1- 19 510 825
- DE-A1- 19 705 701
- DE-A1- 19 921 842
- FR-A- 1 155 705
- US-A1- 4 148 670
- US-A1- 4 273 592
- US-A1- 5 641 542
- US-A1- 2004 025 973
- US-B1- 6 312 812

## Beschreibung

Die vorliegende Erfindung betrifft ein neues Produkt zur Korrosionsschutzbehandlung von Metalloberflächen. Weiterhin wird ein spezieller Verfahrensablauf zur Korrosionsschutzbehandlung speziell von Stahloberflächen beschrieben. Die Korrosionsschutzbehandlung ist vor allem als Vorbehandlung für eine nachfolgende kathodische Elektrotauchlackierung gedacht.

Korrosionsschutzmittel, die eine saure wässrige Lösung von Fluoro-Komplexen darstellen, sind seit langem bekannt. Sie werden zunehmend als Ersatz für Chromatierverfahren eingesetzt, die wegen der toxikologischen Eigenschaften von Chromverbindungen zunehmend weniger verwendet werden. In der Regel enthalten derartige Lösungen von Fluoro-Komplexen weitere korrosionsschützende Wirkstoffe, die Korrosionsschutzwirkung und Lackhaftung weiter verbessern.

Beispielsweise beschreibt die DE-A-19 33 013 in einem Ausführungsbeispiel eine Behandlungslösung, die eine wässrige Lösung von Ammoniumhexafluorozirkonat, Natriumnitrat, Cobaltnitrat und Natrium-m-nitrobenzolsulfonat darstellt und einen pH-Wert von 5,2 hat. Die Lösung kann zur Behandlung von Zink-, Stahl- oder A-luminiumoberflächen eingesetzt werden. EP-A-1 571 237 beschreibt eine Behandlungslösung und Behandlungsmethode für Eisen-, Zink-, Aluminium- und Magnesium-haltige Oberflächen. Diese Lösung hat einen pH-Wert im Bereich von 2 bis 6 und enthält 5 bis 5.000 ppm Zirkonium und/oder Titan sowie 0,1 bis 100 ppm freies Fluorid. Zusätzlich kann die Lösung weitere Komponenten ausgewählt aus Chlorat, Bromat, Nitrit, Nitrat, Permanganat, Vanadat, Wasserstoffperoxid, Wolframat, Molybdat oder jeweils die zugehörigen Säuren enthalten. Organische Polymere können ebenfalls anwesend sein. Nach der Behandlung mit einer derartigen Lösung können die Metalloberflächen mit einer weiteren passivierenden Lösung nachgespült werden. EP-A-1 405 933 offenbart eine Zusammensetzung zur Behandlung von Oberflächen von Eisen und/oder Zink, die zumindest ein Metall aus der Gruppe Ti, Zr, Hf und Si sowie eine Fluorionenquelle enthält, wobei bestimmte Bedingungen an die Konzentrationsverhältnisse dieser beiden Komponenten gestellt werden. Zusätzlich kann diese Lösung dieselben weiteren Wirkstoffe wie in EP 1 571 237 enthalten. Als weitere Komponenten können Metallionen ausgewählt aus der Gruppe Ag, Al, Cu, Fe, Mn, Mg, Ni, Co und Zn anwesend sein. DE-A-100 10 758 offenbart eine Behandlungslösung insbesondere für Oberflächen aus Zink, Aluminium und/oder Magnesium, die komplexe Fluoride von Ti, Zr, Hf, Si und/oder B sowie organische Polymere enthält. Zusätzlich kann die Lösung Ionen eines oder mehrerer der Metalle Mn, Ce, Li, V, W, Mo, Mg, Zn, Co und Ni enthalten. Weitere potentielle Zusätze sind Verbindungen, die bei der schichtbildenden Phosphatierung als Phosphatierungsbeschleuniger bekannt sind. WO 95/14539 beschreibt Behandlungslösungen für Metalloberflächen, insbesondere für Aluminium, die komplexe Fluoride von Ti, Zr, Hf, Si, Ge, Sn oder B sowie organische Hydroxycarbonsäuren mit mindestens 2 Hydroxylgruppen (wobei die Hydroxylgruppen der Carbonsäuregruppen nicht gezählt werden) pro Carbonsäuregruppe enthalten. Ein spezielles Beispiel einer derartigen Säure ist Gluconsäure.

In allen diesen Dokumenten wird entweder allgemein in der Beschreibung oder speziell in den Ausführungsbeispielen erwähnt, dass die mit der genannten Lösung behandelten Metalloberflächen getrocknet werden, bevor sie mit einer weiteren organischen Beschichtung wie beispielsweise einem Lack überzogen werden. Speziell bei der Herstellung, Vorbehandlung und Lackierung von Automobilkarosserien ist es jedoch wegen der kurzen Taktzeiten und einer möglichst geringen Länge der Vorbehandlungslinie erwünscht, dass die vorbehandelten Karosserien ohne Zwischentrocknung, d.h. in nassem Zustand in das Tauchlackbad eingefahren werden. Ein Trocknungsschritt, bei dem die Vorbehandlungsschicht beispielsweise durch Entwässern chemisch modifiziert und/oder verfestigt werden kann, ist dabei unerwünscht. Daher muss bei der Vorbehandlung eine korrosionsschützende Schicht erzeugt werden, die ohne eine Trocknung vor Aufbringen einer ersten organischen Lackschicht die erforderliche Wirkung für Korrosionsschutz und Lackhaftung aufweist.

Ein Beschichtungsverfahren; das diesen Anforderungen genügt, ist in EP-A-1 433 876 beschrieben. Die Behandlung von beispielsweise Oberflächen von Stahl, Zink und Aluminium erfolgt hier mit einer Lösung, die Zr, Ti und/oder Hf sowie Fluoridionen und zusätzlich ein wasserlösliches Harz enthält, das als Polyvinyl- oder Polyallylamin angesehen werden kann. In dem einzigen Ausführungsbeispiel, das eine Lackierung der nass gehaltenen vorbehandelten Metalloberfläche beschreibt, wird eine wässrige Lösung von Fluorozirkonsäure, Polyallylamin, Zinknitrat, Kieselsäure und Ascorbinsäure eingesetzt. Hier ist zu erwarten, dass das organische Polymer eine wesentliche Komponente für die Korrosionsschutzwirkung und die Lackhaftung darstellt. Die Anwesenheit organischer Polymere in Vorbehandlungslösungen ist jedoch häufig unerwünscht, da sie zu Schwierigkeiten bei der Abwasserbehandlung führen können.

Die EP 1433877 offenbart ein "nass in nass" Verfahren zur Korrosionsschutzbehandlung von kalt gewalzten Stahloberflächen, wobei die kalt gewalzten Stahloberflächen erst mit einer sauren wässrigen Konversionslösung beschichtet werden, dann mehrmals mit Wasser gespült, und anschließend im feuchten Zustand mit Elektrotauchlack beschichtet werden. Die in diesem Zusammenhang beschriebenen Konversionslösungen basieren auf Hexafluorozirkonsäuren und mindestens einer weiteren Komponente beispielsweise Magnesiumnitrat und/oder Zinknitrat.

Die DE 19705701 betrifft ebenfalls ein "nass in nass" Verfahren zur Korrosionsschutzbehandlung von Stahloberflächen, wobei die Stahloberflächen in einem dortigen Beispiel zunächst mit einer sauren wässrigen Konversionslösung beschichtet, dann gespült und anschließend mit einer Nachspüle auf Basis von Hexafluorzirkonsäure behandelt wird, bevor im feuchten Zustand ein Elektrotauchlack aufgebracht wird. Gemäß dieser Lehre enthalten die Konversionslösungen Kieselsäure und mindestens eine weitere Komponente, die Zink(II), Mangan(II), Nickel(II) sowie freie Fluoridionen enthält.

Oberflächen von Zink, Aluminium und verzinktem Stahl lassen sich mit sehr unterschiedlich zusammengesetzten wässrigen Lösungen von Fluoro-Komplexen vorbehandeln, wobei die vorstehend genannten Anforderungen eingehalten werden können. Bei nicht vorbeschichteten Stahloberflächen lassen sich die genannten Anforderungen bisher im wesentlichen nur mit einer schichtbildenden Zinkphosphatierung erfüllen. Gegenüber dem Standard der schichtbildenden Zinkphosphatierung zeigt eine Vorbehandlung mit wässrigen Lösungen von Fluoro-Komplexen signifikante Nachteile bezüglich Korrosionsschutzwirkung und Lackhaftung, wenn die vorbehandelten Oberflächen vor der Lackierung nicht getrocknet werden.

Dieses Problem lässt sich jedoch lösen, wenn die wässrige Lösung eines Fluoro-Komplexes bestimmte weitere Komponenten enthält. Demgemäß betrifft die vorliegende Erfindung in einem ersten Aspekt ein Verfahren zur Korrosionsschutzbehandlung von blanken Metalloberflächen, die zumindest teilweise Stahloberflächen darstellen, wobei man die Metalloberflächen mit einer sauren wässrigen Lösung eines Fluoro-Komplexes mindestens eines Elements M ausgewählt aus der Gruppe B, Si, Ti, Zr und Hf in Kontakt bringt, die nicht mehr als 1 g/l anorganische Phosphate oder Phosphorsäure, berechnet als PO43-, enthält, mit Wasser spült und danach mit einem kathodisch abscheidbaren Elektrotauchlack beschichtet, wobei
a) die wässrige Lösung nicht mehr als 1 mg/l organisches Polymer mit Allylamin- oder Vinylamin-Monomeren enthält,
b) die wässrige Lösung ein Puffersystem für den pH-Bereich von 2,5 bis 5,5 enthält,
c) die wässrige Lösung zusätzlich mindestens eine weitere Komponente enthält, die ausgewählt ist aus: Nitrationen, Kupferionen, Silberionen, Vanadium- oder Vanadationen, Wismutionen, Magnesiumionen, Zinkionen, Manganionen, Cobaltionen, Nickelionen, Zinnionen, aromatischen Carbonsäuren mit mindestens zwei Gruppen, die Donoratome enthalten, oder Derivaten solcher Carbonsäuren, Kieselsäure-Partikel mit einer mittleren Teilchengröße unterhalb von 1 µm,
d) die Metalloberfläche nach dem Kontakt mit der wässrigen Lösung des Fluoro-Komplexes und vor der Beschichtung mit dem kathodisch abscheidbaren Elektrotauchlack nicht getrocknet wird.

Hierbei werden unter "Stahloberflächen" Oberflächen von Stählen verstanden, die nicht deckend mit einem weiteren Metall wie beispielsweise Zink oder dessen Legierungen mit Nickel oder Aluminium beschichtet sind. Unter "blanken" Metalloberflächen werden Metalloberflächen verstanden, die noch keine korrosionsschützende Beschichtung tragen. Bei dem erfindungsgemäßen Verfahren handelt es sich also um den ersten oder einzigen Behandlungsschritt, der eine Korrosionsschutzschicht erzeugt, die wiederum als Basis für eine nachfolgende Lackierung dienen kann. Es handelt sich also nicht um eine Nachbehandlung einer zuvor erzeugten Korrosionsschutzschicht wie beispielsweise einer Phosphatschicht.

Als eine der vorstehend genannten Komponenten kann die Behandlungslösung aromatische Carbonsäuren enthalten, die dadurch charakterisiert sind, dass sie im Molekül mindestens 2 Gruppen aufweisen, die Donoratome enthalten. Donoratome sind solche Atome, die freie Elektronenpaare tragen, über die sie an Übergangsmetallionen koordinieren können. Typische Donoratome sind Sauerstoff-, Stickstoff- und Schwefelatome. Die Carboxylgruppe der aromatischen Carbonsäuren ist also selbst bereits eine Gruppe, die Donoratome enthält. Eine aromatische Carbonsäure, deren Molekül mindestens 2 Carboxylgruppen aufweist, fällt also unter die genannte Definition. Weiterhin fallen hierunter solche aromatischen Carbonsäuren, die außer der Carboxylgruppe beispielsweise mindestens eine Hydroxylgruppe, mindestens eine Aminogruppe oder mindestens eine Nitrogruppe tragen. Beispiele derartiger Carbonsäuren sind die unterschiedlichen Stellungsisomere der Benzoldicarbonsäure, insbesondere Phthalsäure, oder die unterschiedlichen Stellungsisomere von Hydroxy-, Amino- oder Nitrobenzoesäure.

Dabei sind allgemein solche aromatische Carbonsäuren bevorzugt, bei denen mindestens 2 Gruppen, die Donoratome enthalten, so angeordnet sind, dass über die Donoratome 5-, 6- oder 7-gliedrige Chelatkomplexe mit Übergangsmetallionen gebildet werden können. Besonders bevorzugte aromatische Carbonsäuren sind demnach: Phthalsäure, Salicylsäure, o-Aminobenzoesäure oder o-Nitrobenzoesäure. Anstelle von aromatischen Carbonsäuren, die nur einen einzigen Benzolring enthalten, können auch die entsprechenden Säuren mit kondensierten Ringsystemen, beispielsweise die von Naphthalin oder Anthracen abgeleiteten Säuren eingesetzt werden.

Dabei können auch Derivate der genannten aromatischen Carbonsäuren eingesetzt werden. Hierunter werden solche Moleküle verstanden, bei denen eines oder mehrere Wasserstoffatome der Grundform (z.B. Wasserstoffatome am aromatischen Kern, Wasserstoffatome der Hydroxy- oder Aminogruppen oder Wasserstoffatome der Carbonsäuregruppen) durch andere Atome oder Atomgruppen ersetzt sind.

Die genannten Kieselsäure-Partikel mit einer mittleren Teilchengröße unterhalb von 1 µm sind dem hier betroffenen Fachmann unter unterschiedlichen generischen Bezeichnungen bekannt. Beispielsweise werden sie als kolloide Kieselsäure, Fällungskieselsäure oder pyrogene Kieselsäure bezeichnet. Die mittlere Teilchengröße, die vorzugsweise im Bereich von etwa 0,01 µm bis etwa 1 µm liegt, lässt sich durch Lichtbeugungsmethoden oder elektronenmikroskopisch bestimmen.

Aus toxikologischen Gründen wird im erfindungsgemäßen Verfahren eine wässrige Lösung eingesetzt, die im wesentlichen frei ist von Chrom(VI)-Verbindungen und die vorzugsweise überhaupt keine Chrom-Verbindungen enthält.

Dabei bleiben Spuren von Chrom-Verbindungen unberücksichtigt, die durch Herauslösen aus Edelstahlbehältern in die Behandlungslösung gelangen können. Als "chromfrei" in diesem Sinne werden Behandlungslösungen verstanden, die nicht mehr als 1 ppm, insbesondere nicht mehr als 0,1 ppm Chrom enthalten. Die erfindungsgemäß einzusetzenden Behandlungslösungen stellen keine Phosphatierlösungen dar, d. h. sie führen nicht zur Ausbildung einer amorphen oder kristallinen Phosphatschicht. Dies wird dadurch erreicht, dass die Behandlungslösungen nicht mehr als 1 g/l anorganische Phosphate oder Phosphorsäure, berechnet als PO4³⁻, enthalten. Phosphat-Gehalte im Bereich von beispielsweise 10 bis 500 mg/l sind jedoch tolerierbar und können sogar die Wirkung der Behandlungslösung verbessern.

Die Stabilität von Konzentraten, aus denen durch Verdünnen mit Wasser die im erfindungsgemäßen Verfahren einzusetzende wässrige Behandlungslösung hergestellt werden kann, kann durch Zusatz von Verdickungs- und/oder Dispergiermittel verbessert werden. Diese Verdickungs- und/oder Dispergiermittel liegen dann in entsprechend verdünntem Zustand auch in der einsatzbereiten wässrigen Behandlungslösung vor. Ihre Anwesenheit in der Behandlungslösung ist tolerierbar, so dass eine solche Behandlungslösung in dem erfindungsgemäßen Verfahren verwendet werden kann. Demnach kann die wässrige Behandlungslösung dadurch charakterisiert sein, dass sie nicht mehr als 1 mg/l eines anderen organischen Polymers enthält als eines solchen, das keine Allylamin- oder Vinylamin-Monomere aufweist und das bei einer Konzentration von nicht mehr als 50 g/l verdickende oder dispergierende Eigenschaften hat. Beispiele derartiger Polymere sind Polymere oder Copolymere von ungesättigten Carbonsäuren, Kohlehydrate oder Proteine.

Die wässrige Behandlungslösung soll nicht mehr als 1 mg/l eines organischen Polymers mit Allylamin- oder Vinylamin-Monomeren enthalten. Andere Polymere können jedoch anwesend sein. Hierunter fallen die vorstehend genannten Polymere mit verdickenden und/oder dispergierenden Eigenschaften. Außer diesen kann die Behandlungslösung weitere Polymere enthalten, deren positive Wirkung bei einer Korrosionsschutzbehandlung bekannt ist. Beispiele derartiger Polymere (einschließlich solcher mit verdickenden und/oder dispergierenden Eigenschaften) sind:
a) Polymere oder Copolymere von ungesättigten Alkoholen oder deren Ester oder Ether,
b) Polymere oder Copolymere von ungesättigten Carbonsäuren, Organophosphonsäuren, Organophosphinsäuren oder jeweils deren Salzen, Ester oder Amide,
c) Polyaminosäuren oder Proteine oder jeweils deren Salze, Ester oder Amide,
d) Kohlehydrate oder deren Ester (inklusive Xanthogensäure-Ester) oder Ether,
e) Polyamine, bei denen die Stickstoffatome in die Polymerkette eingebunden sind,
f) Polyether,
g) Polyvinylphenole und deren Substitutionsprodukte,
h) Epoxidharze, Aminoplastharze, Tannine, Phenol-Formaldehydharze,
i) Polymere und Copolymere von Vinylpyrrolidon.

Sofern derartige Polymere anwesend sind, liegt ihre Konzentration in der wässrigen Behandlungslösung vorzugsweise unterhalb von 2000 mg/l. Aus sekundären technischen Gründen wie beispielsweise zur Vereinfachung der Abwasserbehandlung kann es vorteilhaft sein, auf die Anwesenheit von organischen Polymeren in der wässrigen Behandlungslösung weitgehend oder vollständig zu verzichten. Demnach ist eine bevorzugte Ausführungsform der vorliegenden Erfindung dadurch gekennzeichnet, dass die wässrige Lösung nicht mehr als 1 mg/l organisches Polymer enthält.

Die saure Behandlungslösung weist vorzugsweise einen pH-Wert im Bereich von 2 bis 5,5, insbesondere von 3,5 bis 5 auf. Vorzugsweise wird der pH-Wert auf den genannten sauren Bereich dadurch eingestellt, dass man den Fluoro-Komplex zumindest teilweise in Form einer Säure einsetzt. Er kann jedoch auch durch eine andere Säure, beispielsweise Salpetersäure, eingestellt werden. Erfindungsgemäß sind gemäß diesem ersten Aspekt der Erfindung keine Maßnahmen erforderlich und sollen vorzugsweise sogar vermieden werden, durch die die Metalloberfläche nach dem Kontakt mit der wässrigen Lösung des Fluoro-Komplexes und vor der Beschichtung mit dem kathodisch abscheidbaren Elektrotauchlack getrocknet wird. Ein unbeabsichtigtes Trocken kann jedoch bei Anlagenstillstand eintreten, wenn sich die behandelte Metalloberfläche, beispielsweise eine Automobilkarosserie oder ein Teil hiervon, zwischen dem Bad mit der wässrigen Lösung des Fluoro-Komplexes und dem Elektrotauchlack-Bad an der Luft befindet. Diese unbeabsichtigte Trocknung ist jedoch unschädlich.

Die inden Merkmalen b) c) genannten weiteren Komponenten liegen vorzugsweise in folgenden Konzentrationsbereichen vor:
Nitrationen: 0,1 bis 5000 mg/l, vorzugsweise 1 bis 3000 mg/l, insbesondere 10 bis 1000 mg/l,
Kupfer-, Silber, Cobalt- oder Nickelionen: jeweils 0,1 bis 300 mg/l, vorzugsweise 1 bis 30 mg/l,
Vanadium- oder Vanadationen: 1 bis 2000 mg/l, vorzugsweise 5 bis 500 mg/l (als Vanadium berechnet),
Wismut-, Magnesium-, Zink-, Mangan- oder Zinnionen: jeweils 1 bis 2000 mg/l, vorzugsweise 5 bis 500 mg/l,
Puffersystem für den pH-Bereich von 2,5 bis 5,5: in einer solchen Menge, dass sich der pH-Wert der Lösung bei einem Eintrag von einem Val Säure oder Lauge pro Liter Lösung um nicht mehr als 0,2 Einheiten verändert, aromatische Carbonsäuren mit mindestens zwei Gruppen, die Donoratome enthalten, oder Derivate solcher Carbonsäuren: 0,01 bis 1000 mg/l, vorzugsweise 1 bis 500 mg/l,
Silicium in Form von Kieselsäure-Partikel mit einer mittleren Teilchengröße unterhalb von 1 µm: 10 bis 1000 mg/l, vorzugsweise 50 bis 500 mg/l

Wenn im Rahmen der vorliegenden Erfindung von einer "Säure", speziell von "Carbonsäure" die Rede ist, so ist hierunter die freie Säure und/oder deren Anionen zu verstehen. Dem Fachmann ist bewusst, dass sich unabhängig davon, ob die Säure in freier Form oder in Form von im angegebenen Konzentrationsbereich löslichen Salzen eingesetzt wird, sich ein Gleichgewicht zwischen freier Säure und Salzform einstellt, das von dem pKs-Wert der betreffenden Säure und dem pH-Wert der wässrigen Lösung abhängt. Konzentrationsangaben sind als freie Säure gerechnet. Dasselbe gilt beispielsweise für H₂ZrF₆ oder andere Säuren, die in der wässrigen Lösung vorhanden sind.

Als Puffersystem für den genannten pH-Bereich ist insbesondere ein Essigsäure/Acetat-Puffer geeignet. Ein weiteres geeignetes Puffersystem basiert auf Kaliumhydrogenphthalat.

Vorzugsweise enthält die wässrige Lösung eine solche Menge an Fluoro-Komplex, dass die Konzentration des Metalls M im Bereich von 1 bis 5.000 mg/l, vorzugsweise im Bereich von 5 bis 1.000 mg/l und insbesondere im Bereich von 10 bis 500 mg/l liegt. Als Metall M ist Zirkon und/oder Titan besonders bevorzugt.

Weiterhin ist es bevorzugt, dass in dem Fluoro-Komplex das Element M ausgewählt ist aus der Gruppe Si, Ti, Zr und Hf und dass die wässrige Lösung im Mittel mindestens 1, vorzugsweise mindestens 3, insbesondere mindestens 5 Fluorionen pro Ion des Elements M enthält. Dabei ist mit der Formulierung "im Mittel" das rechnerische Atomverhältnis von Fluorionen zu M-Ionen in der wässrigen Lösung gemeint. Wegen der Stabilität von Fluoro-Komplexen der genannten Metalle M ist zu erwarten, dass dann, wenn die wässrige Lösung weniger als 6 Fluorionen pro M-Ion enthält, die Fluorionen nahezu vollständig an die M-Ionen in Form von Fluoro-Komplexen gebunden sind. In diesem Fall sollte also das Fluorid im wesentlichen vollständig als "komplexes Fluorid" vorliegen.

Die wässrige Lösung kann jedoch auch mehr Fluoridionen enthalten als zur vollständigen Bildung von Hexafluoro-Komplexen erforderlich ist. In diesem Fall kann davon ausgegangen werden, dass im Fluoro-Komplex 6 Fluorionen pro M-Ion vorliegen und dass die überschüssigen Fluoridionen als sogenanntes "freies Fluorid" vorliegen. Dies kann beispielsweise in Form von HF und/oder wasserlöslichen Salzen hiervon der Fall sein. Diese Ausführungsform der vorliegenden Erfindung ist dadurch gekennzeichnet, dass im Fluoro-Komplex 6 Fluorionen pro Ion des Metalls M (M ausgewählt aus Si, Ti, Zr, Hf) vorliegen und dass die wässrige Lösung darüber hinaus noch 1 bis 1.000 mg/l Fluoridionen enthält, die nicht an Zirkon gebunden sind.

In einer besonders bevorzugten Ausführungsform enthält die wässrige Lösung mindestens 0,1 mg/l, vorzugsweise mindestens 1 mg/l und insbesondere mindestens 10 mg/l Nitrationen. Die Obergrenze der Nitrationen-Konzentration wählt man eher aus ökonomischen als aus technischen Gründen, wobei unter die ökonomischen Gründe auch die Kosten für die Abwasserentsorgung fallen. Beispielsweise kann als Obergrenze der Nitrationen-Konzentration 5000 mg/l, vorzugsweise 3000 mg/l und insbesondere 1000 mg/l gewählt werden. Als weitere bevorzugte Komponente gemäß Merkmal b) kann die wässrige Lösung Kupfer- und/oder Silberionen enthalten. Diese können anstelle der Nitrationen oder zusammen mit diesen anwesend sein. In dieser Ausführungsform enthält die wässrige Lösung vorzugsweise 0,1 bis 300 mg/l, insbesondere 1 bis 30 mg/l Kupfer- und/oder Silberionen.

In einer weiteren bevorzugten Ausführungsform enthält die wässrige Lösung mindestens eine aromatische Carbonsäure, wie weiter oben definiert, oder Derivate hiervon. Salicylsäure ist besonders bevorzugt. Die aromatische Carbonsäure kann gemeinsam mit den Nitrationen und/oder den Kupfer- und/oder Silberionen anwesend sein. Sie ist vorzugsweise in einer Konzentration von mindestens 0,1 mg/l, vorzugsweise mindestens 1 mg/l und insbesondere mindestens 10 mg/l anwesend. Die Obergrenze der Konzentration ist wiederum eher ökonomisch als technisch bedingt. Beispielsweise kann als Konzentrations-Obergrenze der aromatischen Carbonsäure 1000 mg/l, vorzugsweise 500 mg/l und insbesondere 400 mg/l gewählt werden.

Bevorzugt einzusetzende wässrige Behandlungslösungen enthalten demnach mindestens eine der vorstehend näher beschriebenen Komponenten: Nitrationen, Kupfer- und/oder Silberionen, aromatische Carbonsäuren und/oder Kielselsäure-Partikel mit einer mittleren Teilchengröße unterhalb von 1 µm. Dabei können auch 2 oder mehrere dieser Komponenten gemeinsam vorliegen. Die Anwesenheit weiterer Komponenten zusätzlich zu den 4 genannten bevorzugten kann sich günstig auf Korrosionsschutz und Lackhaftung auswirken. Beispielsweise können zusätzlich zu einer oder mehreren der 4 vorstehend genannten Komponenten (Nitrationen, Kupfer- und/oder Silberionen, aromatische Carbonsäuren, Kielselsäure-Partikel) noch eine oder mehrere der folgenden Komponenten vorhanden sein: Vanadium- oder Vanadationen, Cobaltionen, Nickelionen, Manganionen, Zinnionen, Wismutionen, Magnesiumionen und Zinkionen. Deren bevorzugte Konzentrationsbereiche wurden vorstehend bereits angegeben. Besonders bevorzugt ist hierbei eine Behandlungslösung, die zusätzlich zu mindestens einer der genannten 4 bevorzugten Komponenten (Nitrationen, Kupfer- und/oder Silberionen, aromatische Hydroxycarbonsäuren, Kielselsäure-Partikel) sowohl Zinkionen als auch Magnesiumionen enthält.

Weiterhin kann die wässrige Behandlungslösung zusätzlich Aluminiumionen enthalten. Diese können in Form löslicher Salze, beispielsweise in Form der Nitrate eingebracht werden. In diesem Falle enthält die wässrige Behandlungslösung vorzugsweise 1 bis 1.000 mg/l, insbesondere 10 bis 500 mg/l Aluminiumionen. Aluminiumionen können als "Fänger" für überschüssige freie Fluoridionen dienen, da sie mit diesen stabile Fluorokomplexe bilden. Freie Fluoridionen entstehen in der wässrigen Behandlungslösung dadurch, dass sich das Metall M, beispielsweise Zirkonium, vermutlich in Form von Oxiden, auf den behandelten Metalloberflächen niederschlägt. Die ursprünglich an das Metall M gebundenen Fluoridionen werden hierbei frei. Die durch freie Fluoridionen erhöhte Beizwirkung der wässrigen Lösung kann durch Anwesenheit der Aluminiumionen in Folge der Komplexbildung reduziert werden.

Zusätzlich zu den bereits genannten Komponenten kann die wässrige Behandlungslösung Verbindungen enthalten, die bei der schichtbildenden Phosphatierung als so genannte "Beschleuniger" eingesetzt werden. Diese Beschleuniger haben die Eigenschaft, Wasserstoffatome, die beim Beizangriff der Säure auf die Metalloberfläche entstehen, abzufangen: Diese auch als "Depolarisation" bezeichnete Reaktion erleichtert den Angriff der sauren Behandlungslösung auf die Metalloberfläche und beschleunigt hierdurch die Ausbildung der Korrosionsschutzschicht. Beispielsweise können Beschleuniger eingesetzt werden, die in dem vorstehend genannten Dokument DE-A-199 33 189 aufgeführt sind:
0,05 bis 2 g/l m-Nitrobenzolsulfonationen,
0,1 bis 10 g/l Hydroxylamin in freier oder gebundener Form,
0,05 bis 2 g/l m-Nitrobenzoationen,
0,05 bis 2 g/l p-Nitrophenol,
1 bis 70 mg/l Wasserstoffperoxid in freier oder gebundener Form,
0,05 bis 10 g/l organische N-Oxide
0,01 bis 3 g/l, vorzugsweise bis 0,5 g/l Nitroguanidin
1 bis 500 mg/l Nitritionen
0,5 bis 5 g/l Chlorationen.

Aus dem vorstehend genannten Dokument EP-A-1 571 237 ist es bekannt, die behandelte Metalloberfläche nach der Behandlung mit der wässrigen Lösung eines Fluoro-Komplexes mit einer wässrigen Lösung nachzuspülen, die eine oder mehrere Komponenten ausgewählt aus Verbindungen oder Salzen der Elemente Cobalt, Nickel, Zinn, Kupfer, Titan und Zirkon und/oder aus wasserlöslichen oder wasserdispergierbaren organischen Polymeren enthält. Durch diese Nachspülung wird Korrosionsschutz und Lackhaftung weiter verbessert. Eine derartige Nachspülung wirkt sich auch im Zuge des erfindungsgemäßen Verfahrens positiv aus. Demnach umfasst die vorliegende Erfindung auch eine Verfahrensvariante, bei der man die Metalloberfläche nach dem Kontakt mit der wässrigen Lösung eines Fluoro-Komplexes und vor dem Beschichten mit dem kathodisch abscheidbaren Elektrotauchlack mit einer wässrigen Lösung nachspült, die eine oder mehrere Komponenten ausgewählt aus Verbindungen oder Salzen der Elemente Cobalt, Nickel, Zinn, Kupfer, Titan und Zirkon und/oder von wasserlöslichen oder wasserdispergierbaren organischen Polymeren enthält.

Im Rahmen der Untersuchungen, die zu dem vorstehend beschriebenen erfindungsgemäßen Verfahrensablauf führten, wurde deutlich, dass ein Zusatz von einer oder mehreren Komponenten ausgewählt aus Zinnionen, Wismutionen, aromatischen Carbonsäuren oder Derivaten hiervon die Korrosionsschutzwirkung von wässrigen Lösungen von Fluoro-Komplexen für Oberflächen aus Stahl, Aluminium, Zink und verzinktem Stahl generell verbessert. Dies gilt unabhängig davon, ob die Oberflächen zwischen dem Kontakt mit dieser Lösung und einer nachfolgenden Lackierung getrocknet werden oder nicht. Derartige Behandlungslösungen sind also nicht nur im Rahmen der vorstehend beschriebenen erfindungsgemäßen Verfahrensfolge vorteilhaft einsetzbar, sondern zeigen eine positive Wirkung für Korrosionsschutz und Lackhaftung von Metalloberflächen allgemein.

Ein zweiter Aspekt der vorliegenden Erfindung liegt also in der Bereitstellung einer sauren, chromfreien wässrigen Lösung mindestens eines Fluoro-Komplexes mindestens eines Elements M ausgewählt aus der Gruppe B, Si, Ti, Zr und Hf mit einem pH-Wert im Bereich von 2 bis 5,5, die nicht mehr als 1 g/l anorganische Phosphate oder Phosphorsäure, berechnet als PO₄³⁻, enthält, zur Behandlung von Metalloberflächen, dadurch gekennzeichnet, dass sie ein Puffersystem für den pH-Bereich 2,5 bis 5,5 und zusätzlich eine oder mehrere Komponenten ausgewählt aus: Kupferionen, Zinnionen, Wismutionen, aromatischen Carbonsäuren mit mindestens zwei Gruppen, die Donoratome enthalten, oder Derivaten solcher Carbonsäuren und Silizium bei einem organischen Polymergehalt von nicht mehr als 1mg/l in Form von Kieselsäurepartikeln mit einer mittleren Teilchengröße unterhalb von 1mm enthält.

Als eine der vorstehend genannten Komponenten kann die Behandlungslösung aromatische Carbonsäuren enthalten, die dadurch charakterisiert sind, dass sie im Molekül mindestens 2 Gruppen aufweisen, die Donoratome enthalten. Donoratome sind solche Atome, die freie Elektronenpaare tragen, über die sie an Übergangsmetallionen koordinieren können. Typische Donoratome sind Sauerstoff-, Stickstoff- und Schwefelatome. Die Carboxylgruppe der aromatischen Carbonsäuren ist also selbst bereits eine Gruppe, die Donoratome enthält. Eine aromatische Carbonsäure, deren Molekül mindestens 2 Carboxylgruppen aufweist, fällt also unter die genannte Definition. Weiterhin fallen hierunter solche aromatischen Carbonsäuren, die außer der Carboxylgruppe beispielsweise mindestens eine Hydroxylgruppe, mindestens eine Aminogruppe oder mindestens eine Nitrogruppe tragen. Beispiele derartiger Carbonsäuren sind die unterschiedlichen Stellungsisomere der Benzoldicarbonsäure, insbesondere Phthalsäure oder die unterschiedlichen Stellungsisomere von Hydroxy-, Amino- oder Nitrobenzoesäure.

Dabei sind allgemein solche aromatische Carbonsäuren bevorzugt, bei denen mindestens 2 Gruppen, die Donoratome enthalten, so angeordnet sind, dass über die Donoratome 5-, 6- oder 7-gliedrige Chelatkomplexe mit Übergangsmetallionen gebildet werden können. Besonders bevorzugte aromatische Carbonsäuren sind demnach: Phthalsäure, Salicylsäure, o-Aminobenzoesäure oder o-Nitrobenzoesäure. Anstelle von aromatischen Carbonsäuren, die nur einen einzigen Benzolring enthalten, können auch die entsprechenden Säuren mit kondensierten Ringsystemen, beispielsweise die von Naphthalin oder Anthracen abgeleiteten Säuren eingesetzt werden.

Dabei können auch Derivate der genannten Carbonsäuren eingesetzt werden. Hierunter werden solche Moleküle verstanden, bei denen eines oder mehrere Wasserstoffatome der Grundform (z.B. Wasserstoffatome am aromatischen Kern, Wasserstoffatome der Hydroxy- oder Aminogruppen oder Wasserstoffatome der Carbonsäuregruppen) durch andere Atome oder Atomgruppen ersetzt sind.

Für diesen zweiten Aspekt der vorliegenden Erfindung gelten die vorstehend gemachten Erläuterungen zu den essentiellen oder weiteren fakultativen Komponenten entsprechend:
Aus toxikologischen Gründen wird eine wässrige Lösung eingesetzt, die im wesentlichen frei ist von Chrom(Vl)-Verbindungen und die vorzugsweise überhaupt keine Chrom-Verbindungen enthält. Dabei bleiben Spuren von Chrom-Verbindungen unberücksichtigt, die durch Herauslösen aus Edelstahlbehältern in die Behandlungslösung gelangen können. Als "chromfrei" in diesem Sinne werden Behandlungslösungen verstanden, die nicht mehr als 1 ppm, insbesondere nicht mehr als 0,1 ppm Chrom enthalten. Die erfindungsgemäßen Behandlungslösungen stellen keine Phosphatierlösungen dar, d. h. sie führen nicht zur Ausbildung einer amorphen oder kristallinen Phosphatschicht. Dies wird dadurch erreicht, dass die Behandlungslösungen nicht mehr als 1 g/l anorganische Phosphate oder Phosphorsäure, berechnet als PO₄³⁻, enthalten. Phosphat-Gehalte im Bereich von beispielsweise 10 bis 500 mg/l sind jedoch tolerierbar und können sogar die Wirkung der Behandlungslösung verbessern.

Die saure Behandlungslösung weist einen pH-Wert im Bereich von 2 bis 5,5, insbesondere von 3,5 bis 5 auf. Vorzugsweise wird der pH-Wert auf den genannten sauren Bereich dadurch eingestellt, dass man den Fluoro-Komplex zumindest teilweise in Form einer Säure einsetzt. Er kann jedoch auch durch eine andere Säure, beispielsweise Salpetersäure, eingestellt werden.

Die eine oder mehrere essentiellen Komponenten liegen vorzugsweise in folgenden Konzentrationsbereichen vor:
Kupferionen: 0,1 bis 300 mg/l, vorzugsweise 1 bis 30mg/l,
Zinnionen: 1 bis 2000 mg/l, vorzugsweise 5 bis 500 mg/l,
Wismutionen: 1 bis 2000, vorzugsweise 5 bis 500 mg/l,
Puffersystem für den pH-Bereich von 2,5 bis 5,5: in einer solchen Menge, dass sich der pH-Wert der Lösung bei einem Eintrag von einem Val Säure oder Lauge pro Liter Lösung um nicht mehr als 0,2 Einheiten verändert,
aromatische Carbonsäuren: 0,1 bis 1000, vorzugsweise 1 bis 500 mg/l, 10 bis 1000 mg/l, vorzugsweise 50 bis 500 mg/l Silizium in Form von Kieselsäurepartikeln mit einer mittleren Teilchengröße unterhalb von 1 µm.

Zusätzlich kann diese wässrige Lösung eine oder mehrere der folgenden Komponenten enthalten:
Nitrationen: 0,1 bis 5000 mg/l, vorzugsweise 1 bis 1000 mg/l,
Cobalt-, Nickel- und/oder Silberionen: jeweils 0,1 bis 300 mg/l, vorzugsweise 1 bis 30 mg/l,
Vanadium- oder Vanadationen: 1 bis 2000, vorzugsweise 5 bis 500 mg/l (als Vanadium berechnet),
Magnesiumionen: 1 bis 2000, vorzugsweise 5 bis 500 mg/l,
Manganionen: 1 bis 2000 mg/l, vorzugsweise 5 bis 500 mg/l,
Zinkionen: 1 bis 2000, vorzugsweise 5 bis 500 mg/l,

Hierbei kann es bevorzugt sein, dass die wässrige Lösung zusätzlich zu mindestens einer der genannten essentiellen Komponenten sowohl Zinkionen als auch Magnesiumionen enthält. Weiterhin ist die Anwesenheit von Silberionen bevorzugt.

Das Puffersystem für den pH-Bereich 2,5 bis 5,5 liegt vorzugsweise in einer solchen Menge vor, dass sich der pH-Wert der Lösung bei einem Eintrag von einem Val Säure oder Lange pro Liter Lösung um nicht mehr als 0,2 Einheiten verändert.

Als Puffersystem für den genannten pH-Bereich ist insbesondere ein Essigsäure/Acetat-Puffer geeignet. Ein weiteres geeignetes Puffersystem basiert auf Kaliumhydrogenphthalat.

Vorzugsweise enthält die wässrige Lösung eine solche Menge an Fluoro-Komplex, dass die Konzentration des Metalls M im Bereich von 1 bis 5.000 mg/l, vorzugsweise im Bereich von 5 bis 1.000 mg/l und insbesondere im Bereich von 10 bis 500 mg/l liegt. Als Metall M ist Zirkon und/oder Titan besonders bevorzugt.

Weiterhin ist es bevorzugt, dass in dem Fluoro-Komplex das Element M ausgewählt ist aus der Gruppe Si, Ti, Zr und Hf und dass die wässrige Lösung im Mittel mindestens 1, vorzugsweise mindestens 3, insbesondere mindestens 5 Fluorionen pro Ion des Elements M enthält. Dabei ist mit der Formulierung "im Mittel" das rechnerische Atomverhältnis von Fluorionen zu M-Ionen in der wässrigen Lösung gemeint. Wegen der Stabilität von Fluoro-Komplexen der genannten Metalle M ist zu erwarten, dass dann, wenn die wässrige Lösung weniger als 6 Fluorionen pro M-Ion enthält, die Fluorionen nahezu vollständig an die M-Ionen in Form von Fluoro-Komplexen gebunden sind. In diesem Fall sollte also das Fluorid im wesentli-chen vollständig als "komplexes Fluorid" vorliegen.

Die wässrige Lösung kann jedoch auch mehr Fluoridionen enthalten als zur vollständigen Bildung von Hexafluoro-Komplexen erforderlich ist. In diesem Fall kann davon ausgegangen werden, dass im Fluoro-Komplex 6 Fluorionen pro M-Ion vorliegen und dass die überschüssigen Fluoridionen als so genanntes "freies Fluorid" vorliegen. Dies kann beispielsweise in Form von HF und/oder wasserlöslichen Salzen hiervon der Fall sein. Diese Ausführungsform der vorliegenden Erfindung ist dadurch gekennzeichnet, dass im Fluoro-Komplex 6 Fluorionen pro Ion des Metalls M (M ausgewählt aus Si, Ti, Zr, Hf) vorliegen und dass die wässrige Lösung darüber hinaus noch 1 bis 1.000 mg/l Fluoridionen enthält, die nicht an Zirkon gebunden sind.

Wenn im Rahmen des zweiten Aspekts der der vorliegenden Erfindung von einer "Säure", speziell von "Carbonsäure" die Rede ist, so ist hierunter die freie Säure und/oder deren Anionen zu verstehen. Dem Fachmann ist bewusst, dass sich unabhängig davon, ob die Säure in freier Form oder in Form von im angegebenen Konzentrationsbereich löslichen Salzen eingesetzt wird, sich ein Gleichgewicht zwischen freier Säure und Salzform einstellt, das von dem pKₛ-Wert der betreffenden Säure und dem pH-Wert der wässrigen Lösung abhängt. Konzentrationsangaben sind als freie Säure gerechnet. Dasselbe gilt beispielsweise für H₂ZrF₆ oder andere Säuren, die in der wässrigen Lösung vorhanden sind.

In einer im zweiten Aspekt der vorliegenden Erfindung bevorzugten Ausführungsform enthält die wässrige Lösung mindestens eine aromatische Carbonsäure, vorzugsweise Salicylsäure, oder Derivate hiervon. Diese kann gemeinsam mit den Wismutionen und/oder dem Puffersystem anwesend sein. Sie ist vorzugsweise in einer Konzentration von mindestens 0,1 mg/l, vorzugsweise mindestens 1 mg/l und insbesondere mindestens 10 mg/l anwesend. Die Obergrenze der Konzentration ist wiederum eher ökonomisch als technisch bedingt. Beispielsweise kann als Konzentrations-Obergrenze der aromatischen Hydroxycarbonsäure 1000 mg/l, vorzugsweise 500 mg/l und insbesondere 400 mg/l gewählt werden.

Weiterhin kann die wässrige Behandlungslösung zusätzlich Aluminiumionen enthalten. Diese können in Form löslicher Salze, beispielsweise in Form der Nitrate eingebracht werden. In diesem Falle enthält die wässrige Behandlungslösung vorzugsweise 1 bis 1.000 mg/l, insbesondere 10 bis 500 mg/l Aluminiumionen. Aluminiumionen können als "Fänger" für überschüssige freie Fluoridionen dienen, da sie mit diesen stabile Fluorokomplexe bilden. Freie Fluoridionen entstehen in der wässrigen Behandlungslösung dadurch, dass sich das Metall M, beispielsweise Zirkonium, vermutlich in Form von Oxiden, auf den behandelten Metalloberflächen niederschlägt. Die ursprünglich an das Metall M gebundenen Fluoridionen werden hierbei frei. Die durch freie Fluoridionen erhöhte Beizwirkung der wässrigen Lösung kann durch Anwesenheit der Aluminiumionen in Folge der Komplexbildung reduziert werden.

Zusätzlich zu den bereits genannten Komponenten gemäß zweitem Aspekt der Erfindung kann die wässrige Behandlungslösung Verbindungen enthalten, die bei der schichtbildenden Phosphatierung als so genannte "Beschleuniger" eingesetzt werden. Diese Beschleuniger haben die Eigenschaft, Wasserstoffatome, die beim Beizangriff der Säure auf die Metalloberfläche entstehen, abzufangen. Diese auch als "Depolarisation" bezeichnete Reaktion erleichtert den Angriff der sauren Behandlungslösung auf die Metalloberfläche und beschleunigt hierdurch die Ausbildung der Korrosionsschutzschicht. Beispielsweise können Beschleuniger eingesetzt werden, die in dem vorstehend genannten Dokument DE-A-199 33 189 aufgeführt sind:
0,05 bis 2 g/l m-Nitrobenzolsulfonationen,
0,1 bis 10 g/l Hydroxylamin in freier oder gebundener Form,
0,05 bis 2 g/l m-Nitrobenzoationen,
0,05 bis 2 g/l p-Nitrophenol,
1 bis 70 mg/l Wasserstoffperoxid in freier oder gebundener Form,
0,05 bis 10 g/l organische N-Oxide
0,01 bis 3 g/l, vorzugsweise bis 0,5 g/l Nitroguanidin
1 bis 500 mg/l Nitritionen
0,5 bis 5 g/l Chlorationen.

Weiterhin kann die Behandlungslösung organische Polymere enthalten, deren positive Wirkung bei einer Korrosionsschutzbehandlung bekannt ist. Beispiele derartiger Polymere sind:
a) Polymere oder Copolymere von ungesättigten Alkoholen oder deren Ester oder Ether,
b) Polymere oder Copolymere von ungesättigten Carbonsäuren, Organophosphonsäuren, Organophosphinsäuren oder jeweils deren Salze, Ester oder Amide,
c) Polyaminosäuren oder Proteine oder jeweils deren Salze, Ester oder Amide,
d) Kohlehydrate oder deren Ester (inklusive Xanthogensäure-Ester) oder Ether,
e) Polyamine, bei denen die Stickstoffatome in die Polymerkette eingebunden sind,
f) Polyether,
g) Polyvinylphenole und deren Substitutionsprodukte,
h) Epoxidharze, Aminoplastharze, Tannine, Phenol-Formaldehydharze,
i) Polymere und Copolymere von Vinylpyrrolidon.

Sofern derartige Polymere anwesend sind, liegt ihre Konzentration in der wässrigen Behandlungslösung vorzugsweise unterhalb von 2000 mg/l. Aus sekundären technischen Gründen wie beispielsweise zur Vereinfachung der Abwasserbehandlung kann es vorteilhaft sein; auf die Anwesenheit von organischen Polymeren in der wässrigen Behandlungslösung weitgehend oder vollständig zu verzichten. Demnach ist eine bevorzugte Ausführungsform der vorliegenden Erfindung dadurch gekennzeichnet, dass die wässrige Lösung nicht mehr als 1 mg/l organisches Polymer enthält. Unter dieser Bedingung ist es weiterhin bevorzugt, dass die wässrige Lösung zusätzlich 10 bis 1.000 mg/l, vorzugsweise 50 bis 500 mg/l Silizium in Form von Kieselsäurepartikel mit einer mittleren Teilchengröße unterhalb von 1 µm enthält. Die genannten Kieselsäure-Partikel mit einer mittleren Teilchengröße unterhalb von 1 µm sind dem hier betroffenen Fachmann unter unterschiedlichen generischen Bezeichnungen bekannt. Beispielsweise werden sie als kolloide Kieselsäure, Fällungskieselsäure oder pyrogene Kieselsäure bezeichnet. Die mittlere Teilchengröße, die vorzugsweise im Bereich von etwa 0,01 µm bis etwa 1 µm liegt, lässt sich durch Lichtbeugungsmethoden oder elektronenmikroskopisch bestimmen.

Die Behandlungslösung gemäß dem zweiten Aspekt der vorliegenden Erfindung kann am Einsatzort durch Auflösen der genannten Komponenten in Wasser und Einstellen des pH-Werts hergestellt werden. Diese Vorgehensweise ist in der Praxis jedoch unüblich. Stattdessen werden in der Praxis üblicherweise wässrige Konzentrate zur Verfügung gestellt, aus denen am Einsatzort durch Verdünnen mit Wasser und erforderlichenfalls Einstellen des pH-Werts die anwendungsfertige wässrige Behandlungslösung hergestellt. Dementsprechend gehört ein wässriges Konzentrat, das beim Verdünnen mit Wasser um einen Faktor von etwa 10 bis etwa 100, insbesondere um einen Faktor im Bereich von etwa 20 bis etwa 50 und erforderlichenfalls Einstellen des pH-Wertes eine saure, chromfreie, wässrige Lösung von Fluoro-Komplexen gemäß vorstehender Beschreibung des zweiten Aspekts der Erfindung ergibt.

Die Konzentrate können zur Stabilisierung Polymere mit verdickenden und/oder dispergierenden Eigenschaften enthalten. Beispiele derartiger Polymere sind Polymere oder Copolymere von ungesättigten Carbonsäuren, Kohlehydrate oder Proteine. Diese können in einer Konzentration bis zu 50 g/l anwesend sein.

Aus Stabilitätsgründen sind derartige Konzentrate oft so eingestellt, dass beim Verdünnen mit Wasser der pH-Wert nicht unmittelbar im erforderlichen Bereich liegt. In diesem Fall muss nach dem Verdünnen mit Wasser der pH-Wert entweder nach unten oder nach oben korrigiert werden. Ein Einstellen nach unten erfolgt durch Zugabe einer Säure, wobei sich im vorliegenden Fall entweder die Säureform des Fluoro-Komplexes des Metalls M oder Salpetersäure anbietet. Eine Einstellung des pH-Wertes nach oben kann mit einer beliebigen basischen Substanz erfolgen, beispielsweise mit einer Lösung von Alkalimetallhydroxiden oder - carbonaten, Ammoniak oder organischen Aminen. Zum Erhöhen des pH-Wertes können jedoch auch basisch wirkende Verbindungen oder Salze, wie beispielsweise Oxide, Hydroxide oder Carbonate von Metallen eingesetzt werden, die mögliche Wirkkomponenten in der Behandlungslösung darstellen. Beispielsweise können hier für Oxide, Hydroxide oder Carbonate von Magnesium oder Zink verwendet werden.

Zum zweiten Aspekt der vorliegenden Erfindung gehört weiterhin ein Verfahren zur Korrosionsschutzbehandlung von blanken Metalloberflächen, wobei man die Metalloberflächen mit einer vorstehend beschriebenen wässrigen Lösung gemäß zweitem Aspekt der Erfindung in Kontakt bringt.

Dabei kann es bevorzugt sein, dass man die Metalloberfläche nach dem Kontakt mit der wässrigen Lösung eines Fluoro-Komplexes mit einer wässrigen Lösung nachspült, die eine oder mehrere Komponenten ausgewählt aus Verbindungen oder Salzen der Elemente Cobalt, Nickel, Zinn, Kupfer, Titan und Zirkon und/oder aus wasserlöslichen oder wasserdispergierbaren organischen Polymeren enthält.

Der Begriff der "bianken" Metalloberfläche wurde weiter oben im Zusammenhang mit dem ersten Aspekt der vorliegenden Erfindung erläutert. Diese Erläuterung gilt auch für den zweiten Aspekt der vorliegenden Erfindung entsprechend.

Unabhängig davon, ob die Behandlung der Metalloberfläche mit der wässrigen Lösung eines Fluoro-Komplexes entsprechend der Verfahrensfolge gemäß dem ersten Aspekt der Erfindung oder mit einer wässrigen Lösung gemäß zweitem Aspekt der Erfindung erfolgt, gilt für diesen Verfahrensschritt allgemein:
Man bringt die blanke Metalloberfläche für eine Zeit im Bereich von 0,5 bis 10 Minuten, vorzugsweise im Bereich von 1 bis 5 Minuten mit der sauren wässrigen Lösung eines Fluoro-Komplexes in Kontakt. Dies kann beispielsweise durch Eintauchen in die Behandlungslösung oder durch Besprühen mit der Behandlungslösung erfolgen. Die Temperatur der wässrigen Lösung eines Fluoro-Komplexes liegt dabei vorzugsweise im Bereich von 15 bis 60 °C, insbesondere im Bereich von 25 bis 50 °C. Nach diesem Kontakt wird vorzugsweise mit Wasser, insbesondere mit vollentsalztem Wasser nachgespült. Hieran kann sich fakultativ die vorstehend beschriebene Nachspülung anschließen. In diesem Falle wird anschließend nochmals mit Wasser gespült.

In der Verfahrensfolge gemäß erstem Aspekt der vorstehenden Erfindung werden die behandelten Metalloberflächen ohne Trocknung in ein Bad zur kathodischen Elektrotauchlackierung überführt. Bei der Behandlung mit einer Lösung von Fluoro-Komplexen gemäß zweitem Aspekt der vorliegenden Erfindung kann man genau so verfahren. Man kann aber auch die behandelten Metalloberflächen trocknen, bevor man sie mit einem kahodischen Elektrotauchlack oder mit einem anderen Lack wie beispielsweise einem Pulverlack beschichtet.

Die nachfolgenden Ausführungsbeispiele zeigen die technischen Vorteile des erfindungsgemäßen Verfahrens bzw. der neuen erfindungsgemäßen wässrigen Behandlungslösung.

Als Substrat für die nachstehenden Versuche wurden Probebleche aus kalt gewalztem Stahl eingesetzt, wie er im Automobilbau verwendet wird. Alle Verfahrensschritte wurden als Tauchverfahren durchgeführt. Abkürzungen: VE-Wasser = vollentsalztes Wasser, RT = Raumtemperatur, Min. = Minuten, KTL = kathodische Elektrotauchlackierung.

**Tabelle 1: Allgemeiner Verfahrensablauf.**

| Prozessschritt | Badzusammensetzung | Badtemperatur | pH-Wert | Behandlungsdauer |
|---|---|---|---|---|
| Reinigung | Alkalischer Reiniger der Anmelderin: 3% Ridoline^{R} 1562 + 0,3% Ridosol^{R} 1561 | 60 °C | Alkalisch | 5 Min. |
| Spüle | Betriebswasser | RT | | 1 Min. |
| Spüle | VE-Wasser | RT | | 1 Min. |
| Vorbehandlung | Gemäß Tabellen (Zirkon wird als H₂ZrF₆ eingesetzt) | 30 °C | Gemäß Tabellen | 3 Min. |
| Spüle | VE-Wasser | RT | | 0,5 Min. |
| Fakultative Trocknung (vergl. Tabellen) | Trockenschrank | 50 °C | | 60 Min. |
| KTL | Elektrotauchlack "Cathoguard^{R}" 310 der Firma BASF | | | |

**Tabelle 2:**

| Badzusammensetzung zur Vorbehandlung in der Verfahrensfolge gemäß Tabelle 1 mit Trocknung nach Vorbehandlung und Korrosionsergebnisse: | | |
|---|---|---|
| Wechselklimatest nach VDA 621-415: Korrosion am Schnitt nach 70 Tagen in mm, und Steinschlag nach 70 Tagen, Skala von 0,5-5 gemäß DIN 55996-1 (je kleiner, desto besser) | | |
| Badzusammensetzung | Wechselklimatest: Korrosion | Wechselklimatest: Steinschlag |
| Vergleich 1: 150 mg/l Zr, pH 4, | 3,4 | 4,5 |
| Beispiel 1: 150 mg/l Zr+ 50 mg/l Salicylsäure, pH 4, | 1,6 | 4,0 |
| Beispiel 2: | 1,9 | 3,5 |
| 150 mg/l Zr + 200 mg/l Salicylsäure, pH 4, | | |
| Vergleich 2: 150 mg/l Zr + 200 mg/l Zitronensäure, pH 4 | 9,3 | 5,0 |

### Ergebnis:

Die Beispiele 1 und 2 belegen den günstigen Effekt eines Zusatzes von Salicylsäure, wenn die Vorbehandlungsschicht getrocknet wird. Demgegenüber wirkt sich ein Zusatz von Zitronensäure (Vergleich 2) eher negativ aus.

Die Beispiele 1 und 2 sind kein Bestandteil der erfindungsgemäßen Lehre, sondern Stand der Technik, der das Verständnis der Erfindung erleichtert.

**Tabelle 3:**

| Badzusammensetzung zur Vorbehandlung in der Verfahrensfolge gemäß Tabelle 1 ohne Trocknung nach Vorbehandlung ("nass in nass") und Korrosionsergebnisse: | |
|---|---|
| Wechselklimatest nach VDA 621-415: Korrosion am Schnitt nach 35 Tagen in mm. | |
| Badzusammensetzung | Wechselklimatest: Korrosion |
| Vergleich 3: 150 mg/l Zr, pH 4 | 1,5 |
| Beispiel 3: 150 mg/l Zr, 400 mg/l Nitrat (eingesetzt als Salpetersäure), 200 mg/l Si (eingesetzt als kolloide Kieselsäure), pH 4 | 1,3 |

### Ergebnis:

Das erfindungsgemäße Beispiel 3 belegt den günstigen Effekt eines Zusatzes von Nitrat und Kieselsäure, wenn die Vorbehandlungsschicht nicht getrocknet wird (erster Aspekt der Erfindung).

Tabelle 4: Im Verfahrensablauf nach Tabelle 1 wurde zur Vorbehandlung (Behandlungsdauer: 5 Min.) folgende Behandlungslösung eingesetzt, wobei zum einen (Vergleich 4) nach der Vorbehandlung getrocknet wurde und zum anderen (Beispiel 4) nach der Vorbehandlung und vor der Tauchlackierung nicht getrocknet wurde: 150 mg/l Zr, 400 mg/l Nitrat (eingesetzt als Salpetersäure), 200 mg/l Si (eingesetzt als kolloide Kieselsäure), pH 3,8. Wechselklimatest nach VDA 621-415: Korrosion am Schnitt nach 70 Tagen in mm:

| Badzusammensetzung | Wechselklimatest: Korrosion |
|---|---|
| Vergleich 4 (mit Trocknung) | 3,9 mm |
| Beispiel 4 (ohne Trocknung) | 3,6 mm |

### Ergebnis:

Das erfindungsgemäße Beispiel 4 zeigt, dass bei Anwesenheit von Nitrat und Kieselsäure beim Unterlassen der Trocknung bessere Ergebnisse erzielt werden als mit Trocknung (erster Aspekt der Erfindung)

**Tabelle 5:**

| Badzusammensetzung zur Vorbehandlung in der Verfahrensfolge gemäß Tabelle 5 ohne Trocknung ("nass in nass") nach Vorbehandlung und Korrosionsergebnisse: | | |
|---|---|---|
| Wechselklimatest nach VDA 621-415: Korrosion am Schnitt nach 70 Tagen in mm, und Steinschlag nach 70 Tagen, Skala von 0,5 bis 5 gemäß DIN 55996-1 (je kleiner, desto besser). | | |
| Badzusammensetzung | Wechselklimatest: Korrosion | Wechselklimatest: Steinschlag |
| Vergleich 5 150 mg/l Zr, pH 4 | 3,1 | 4,5 |
| Beispiel 5 150 mg/l Zr + 20 mg/l Cu, pH 4 | 1,3 | 3,7 |
| Beispiel 6 150 mg/l Zr + 20 mg/l Cu + 200 mg/l Si, pH 4 | 1,1 | 3,2 |

### Ergebnis:

Das erfindungsgemäße Beispiel 5 belegt, dass die Zugabe von 20 mg/l Kupfer (als Cu(NO)₃) zum Konversionsbad im "nass-in-nass"-Verfahren deutlich günstigere Unterwanderungswerte im Wechselklimatest liefert. Die weitere Zugabe von 200 mg/l Silicium in Form kolloider Kieselsäure (Beispiel 6) liefert eine deutliche Verbesserung des K-Wertes im Steinschlagtest.

**Tabelle 6:**

| Badzusammensetzung zur Vorbehandlung in der Verfahrensfolge gemäß Tabelle 1 ohne Trocknung ("nass in nass") nach Vorbehandlung und Korrosionsergebnisse: | | |
|---|---|---|
| Wechselklimatest nach VDA 621-415: Korrosion am Schnitt nach 70 Tagen in mm, und Steinschlag nach 70 Tagen, Skala von 0,5 bis 5 gemäß DIN 55996-1 (je kleiner, desto besser). | | |
| Badzusammensetzung | Wechselklimatest: Korrosion | Wechselklimatest: Steinschlag |
| Beispiel 7 150 mg/l Zr + 5 mg/l Cu + 50 mg/l Si, pH 4 | 0,9 | 3,7 |
| Beispiel 8 150 mg/l Zr + 5 mg/l Cu + 50 mg/l Si + 50 mg Nitroguanidin, pH 4 | 0,7 | 2,3 |

### Ergebnis:

Die erfindungsgemäßen Beispiele 7 und 8 zeigen im Vergleich, dass die Zugabe des Beschleunigers Nitroguanidin (50 mg/l) zum Konversionsbad eine weitere Verbesserung im Wechselklimatest bezüglich der korrosiven Lackunterwanderung bedingt und auch im Steinschlagtest deutlich kleinere K-Werte resultieren.

## Patentansprüche

1. Verfahren zur Korrosionsschutzbehandlung von blanken Metalloberflächen, die zumindest teilweise Stahloberflächen darstellen, wobei man die Metalloberflächen mit einer sauren wässrigen Lösung eines Fluoro-Komplexes mindestens eines Elements M ausgewählt aus der Gruppe B, Si, Ti, Zr und Hf in Kontakt bringt, die nicht mehr als 1 g/l anorganische Phosphate oder Phosphorsäure, berechnet als PO₄³⁻, enthält, mit Wasser spült und danach mit einem kathodisch abscheidbaren Elektrotauchlack beschichtet, **dadurch gekennzeichnet, dass**
A) die wässrige Lösung nicht mehr als 1 mg/l organisches Polymer mit Allylamin- oder Vinylamin-Monomeren enthält,
B) die wässrige Lösung ein Puffersystemen für den pH-Bereich von 2,5 bis 5,5 enthält,
C) die wässrige Lösung zusätzlich mindestens eine weitere Komponente enthält, die ausgewählt ist aus: Nitrationen, Kupferionen, Silberionen, Vanadium- oder Vanadationen, Wismutionen, Magnesiumionen, Zinkionen, Manganionen, Cobaltionen, Nickelionen, Zinnionen, aromatischen Carbonsäuren mit mindestens zwei Gruppen, die Donoratome enthalten, oder Derivaten solcher Carbonsäuren, Kieselsäure-Partikel mit einer mittleren Teilchengröße unterhalb von 1 µm,
D) die Metalloberfläche nach dem Kontakt mit der wässrigen Lösung des Fluoro-Komplexes und vor der Beschichtung mit dem kathodisch abscheidbaren Elektrotauchlack nicht getrocknet wird.

2. Verfahren nach Anspruch 1, **dadurch gekennzeichnet, dass** die wässrige Lösung nicht mehr als 1 mg/l eines anderen organischen Polymers enthält als eines solchen, das keine Allylamin- oder Vinylamin-Monomere aufweist und das bei einer Konzentration von nicht mehr als 50 g/l verdickende oder dispergierende Eigenschaften hat.

3. Verfahren nach einem oder beiden der vorherigen Ansprüche, **dadurch gekennzeichnet, dass** die wässrige Lösung nicht mehr als 1 mg/l organisches Polymer enthält.

4. Verfahren nach einem oder mehreren der vorherigen Ansprüche, **dadurch gekennzeichnet, dass** die wässrige Lösung eine solche Menge an Fluoro-Komplex enthält, dass die Konzentration des Elements M im Bereich von 1 bis 5000 mg/l, vorzugsweise im Bereich von 5 bis 1000 mg/l und insbesondere im Bereich von 10 bis 500 mg/l liegt.

5. Verfahren nach Anspruch 4, **dadurch gekennzeichnet, dass** in dem Fluoro-Komplex sechs Fluorionen pro Ion des Elements M vorliegen und dass die wässrige Lösung darüber hinaus noch 1 bis 1000 mg/l Fluoridionen enthält, die nicht an das Element M gebunden sind.

6. Verfahren nach einem oder mehreren der vorherigen Ansprüche, **dadurch gekennzeichnet, dass** die aromatische Carbonsäure ausgewählt ist aus Hydroxycarbonsäuren, Aminocarbonsäuren, Nitrocarbonsäuren und Carbonsäuren mit mindestens zwei Carboxylgruppen, oder Derivaten hiervon, wobei die wässrige Lösung 0,1 bis 1000 mg/l mindestens einer der genannten aromatischen Carbonsäuren oder Derivate hiervon enthält.

7. Verfahren nach einem oder mehreren der vorherigen Ansprüche, **dadurch gekennzeichnet, dass** die wässrige Lösung 10 bis 500 mg/l Nitroguanidin und/oder 0,1 bis 5000 mg/l Nitrationen enthält.

8. Verfahren nach einem oder mehreren der vorherigen Ansprüche, **dadurch gekennzeichnet, dass** die wässrige Lösung 0,1 bis 300 mg/l, vorzugsweise 1 bis 30 mg/l Kupfer- und/oder Silberionen enthält.

9. Verfahren nach einem oder mehreren der vorherigen Ansprüche, **dadurch gekennzeichnet, dass** die wässrige Lösung 10 bis 1000 mg/l, vorzugsweise 50 bis 500 mg/l Silicium in Form von Kieselsäure-Partikel mit einer mittleren Teilchengröße unterhalb von 1 µm enthält.

10. Saure, chromfreie wässrige Lösung eines Fluoro-Komplexes mindestens eines Elements M ausgewählt aus der Gruppe B, Si, Ti, Zr und Hf mit einem pH-Wert im Bereich von 2 bis 5,5, die nicht mehr als 1 g/l anorganische Phosphate oder Phosphorsäure, berechnet als PO₄³⁻, enthält, zur Behandlung von Metalloberflächen, **dadurch gekennzeichnet, dass** sie
a) ein Puffersystem für den pH-Bereich von 2,5 bis 5,5 und
b) zusätzlich eine oder mehrere Komponenten ausgewählt aus:
Kupferionen, Zinnionen, Wismutionen, aromatischen Carbonsäuren mit mindestens zwei Gruppen, die Donoratome enthalten, oder
Derivaten solcher Carbonsäuren, und Silizium bei einem organischen Polymergehalt von nicht mehr als 1 mg/l in Form von KieselsäurePartikeln mit einer mittleren Teilchengröße unterhalb von 1 µm enthält.

11. Wässrige Lösung nach Anspruch 10, **dadurch gekennzeichnet, dass** sie eine solche Menge an Fluoro-Komplex enthält, dass die Konzentration des Elements M im Bereich von 1 bis 5000 mg/l, vorzugsweise im Bereich von 5 bis 1000 mg/l und insbesondere im Bereich von 10 bis 500 mg/l liegt.

12. Wässrige Lösung nach Anspruch 11, **dadurch gekennzeichnet, dass** in dem Fluoro-Komplex sechs Fluorionen pro Ion des Elements M vorliegen und dass die wässrige Lösung darüber hinaus noch 1 bis 1000 mg/l Fluoridionen enthält, die nicht an das Element M gebunden sind.

13. Wässrige Lösung nach einem oder mehreren der Ansprüche 10 bis 12, **dadurch gekennzeichnet, dass** die aromatische Carbonsäure ausgewählt ist aus Hydroxycarbonsäuren, Aminocarbonsäuren, Nitrocarbonsäuren und Carbonsäuren mit mindestens zwei Carboxylgruppen, oder Derivaten hiervon, wobei die wässrige Lösung 0,1 bis 1000 mg/l mindestens einer der genannten aromatischen Carbonsäuren oder Derivate hiervon enthält.

14. Wässrige Lösung nach einem oder mehreren der Ansprüche 10 bis 13, **dadurch gekennzeichnet, dass** sie zusätzlich, 10 bis 500 mg/l Nitroguanidin und/oder 0,1 bis 5000 mg/l Nitrationen enthält.

15. Wässrige Lösung nach einem oder mehreren der Ansprüche 10 bis 14, **dadurch gekennzeichnet, dass** sie 0,1 bis 300 mg/l, vorzugsweise 1 bis 30 mg/l der genannten Kupfer- und/oder Silberionen enthält.

16. Wässrige Lösung nach einem oder mehreren der Ansprüche 10 bis 15, **dadurch gekennzeichnet, dass** sie nicht mehr als 1 mg/l organisches Polymer enthält.

17. Wässrige Lösung nach Anspruch 16, **dadurch gekennzeichnet, dass** sie 10 bis 1000 mg/l, vorzugsweise 50 bis 500 mg/l des genannten Siliziums in Form von Kieselsäure-Partikel mit einer mittleren Teilchengröße unterhalb von 1 µm enthält.

18. Wässriges Konzentrat, das beim Verdünnen mit Wasser um einen Faktor zwischen 10 und 100 und erforderlichenfalls Einstellen des pH-Wertes eine wässrige Lösung nach einem oder mehreren der Ansprüche 10 bis 17 ergibt.

## Claims

1. A method for corrosion-protective treatment of bare metal surfaces that at least in part represent steel surfaces, wherein the metal surfaces are brought into contact with an acidic aqueous solution of a fluoro complex of at least one element M selected from the group of B, Si, Ti, Zr, and Hf, that contains no more than 1 g/l inorganic phosphates or phosphoric acid, calculated as PO₄³⁻, are rinsed with water, and are then coated with a cathodically depositable electrocoating paint, **characterized in that**
A) the aqueous solution contains no more than 1 mg/l organic polymer having allylamine or vinylamine monomers,
B) the aqueous solution contains a buffer system for the pH range from 2.5 to 5.5,
C) the aqueous solution additionally contains at least one further component that is selected from: nitrate ions, copper ions, silver ions, vanadium or vanadate ions, bismuth ions, magnesium ions, zinc ions, manganese ions, cobalt ions, nickel ions, tin ions, aromatic carboxylic acids having at least two groups that contain donor atoms, or derivatives of such carboxylic acids, silicic acids having an average particle size below 1 µm,
D) the metal surface is not dried after contact with the aqueous solution of the fluoro complex and before coating with the cathodically depositable electrocoating paint.

2. The method according to Claim 1, **characterized in that** the aqueous solution contains no more than 1 mg/l of an organic polymer other than one which comprises no allylamine or vinylamine monomers, and that has thickening or dispersing properties at a concentration of no more than 50 g/l.

3. The method according to one or both of the preceding claims, **characterized in that** the aqueous solution contains no more than 1 mg/l organic polymer.

4. The method according to one or more of the preceding claims, **characterized in that** the aqueous solution contains a quantity of fluoro complex such that the concentration of element M is in the range from 1 to 5000 mg/l, preferably in the range from 5 to 1000 mg/l, and in particular in the range from 10 to 500 mg/l.

5. The method according to Claim 4, **characterized in that** six fluorine ions per ion of element M are present in the fluoro complex; and that the aqueous solution furthermore contains 1 to 1000 mg/l fluoride ions that are not bound to element M.

6. The method according to one of more of the preceding claims, **characterized in that** the aromatic carboxylic acid is selected from hydroxycarboxylic acids, aminocarboxylic acids, nitrocarboxylic acids, and carboxylic acids having at least two carboxyl groups, or derivatives thereof, wherein the aqueous solution contains 0.1 to 1000 mg/l of at least one of the aforesaid aromatic carboxylic acids or derivatives thereof.

7. The method according to one or more of the preceding claims, **characterized in that** the aqueous solution contains 10 to 500 mg/l nitroguanidine and/or 0.1 to 5000 mg/l nitrate ions.

8. The method according to one or more of the preceding claims, **characterized in that** the aqueous solution contains 0.1 to 300 mg/l, preferably 1 to 30 mg/l copper ions and/or silver ions.

9. The method according to one or more of the preceding claims, **characterized in that** the aqueous solution contains 10 to 1000 mg/l, preferably 50 to 500 mg/l silicon in the form of silicic acid particles having an average particle size below 1 µm.

10. An acidic, chromium-free aqueous solution of a fluoro complex of at least one element M selected from the group of B, Si, Ti, Zr, and Hf having a pH in the range from 2 to 5.5, that contains no more than 1 g/l inorganic phosphates or phosphoric acid, calculated as PO₄³⁻, for treating metal surfaces, **characterized in that** it contains
a) a buffer system for the pH range from 2.5 to 5.5, and
b) additionally one or more components selected from:
copper ions, tin ions, bismuth ions, aromatic carboxylic acids having at least two groups that contain donor atoms, or derivatives of such carboxylic acids, and silicon having an organic polymer content of no more than 1 mg/l in the form of silicic acid particles having an average particle size below 1 µm.

11. The aqueous solution according to Claim 10, **characterized in that** it contains a quantity of fluoro complex such that the concentration of element M is in the range from 1 to 5000 mg/l, preferably in the range from 5 to 1000 mg/l, and in particular in the range from 10 to 500 mg/l.

12. The aqueous solution according to Claim 11, **characterized in that** six fluorine ions per ion of element M are present in the fluoro complex; and that the aqueous solution furthermore contains 1 to 1000 mg/l fluoride ions that are not bound to element M.

13. The aqueous solution according to one or more of Claims 10 to 12, **characterized in that** the aromatic carboxylic acid is selected from hydroxycarboxylic acids, aminocarboxylic acids, nitrocarboxylic acids, and carboxylic acids having at least two carboxyl groups, or derivatives thereof, wherein the aqueous solution contains 0.1 to 1000 mg/l of at least one of the aforesaid aromatic carboxylic acids or derivatives thereof.

14. The aqueous solution according to one or more of Claims 10 to 13, **characterized in that** it additionally contains 10 to 500 mg/l nitroguanidine and/or 0.1 to 5000 mg/l nitrate ions.

15. The aqueous solution according to one or more of Claims 10 to 14, **characterized in that** it contains 0.1 to 300 mg/l, preferably 1 to 30 mg/l of the aforesaid copper ions and/or silver ions.

16. The aqueous solution according to one or more of Claims 10 to 15, **characterized in that** it contains no more than 1 mg/l organic polymer.

17. The aqueous solution according to Claim 16, **characterized in that** it contains 10 to 1000 mg/l, preferably 50 to 500 mg/l of the aforesaid silicon in the form of silicic acid particles having an average particle size below 1 µm.

18. An aqueous concentration that, upon dilution with water by a factor of between 10 and 100 and, if necessary, adjustment of the pH, yields an aqueous solution according to one or more of Claims 10 to 17.

## Revendications

1. Procédé pour le traitement de protection contre la corrosion de surfaces métalliques nues qui représentent au moins en partie des surfaces en acier, dans lequel on met les surfaces métalliques en contact avec une solution aqueuse acide d'un fluorocomplexe d'au moins un élément M choisi parmi le groupe constitué de B, Si, Ti, Zr et Hf, qui ne contient pas plus de 1 g/l de phosphates inorganiques ou d'acide phosphorique, calculés en tant que PO₄³⁻, on les rince avec de l'eau et on les enduit ensuite d'une peinture électrophorétique par immersion apte à une précipitation cathodique, **caractérisé en ce que**
A) la solution aqueuse ne contient pas plus de 1 mg/litre d'un polymère organique comprenant des monomères d'allylamine ou de vinylamine ;
B) la solution aqueuse contient un système de tampon pour la plage de pH de 2,5 à 5,5
C) la solution aqueuse contient en outre au moins un composant supplémentaire qui est choisi parmi : des ions de nitrate, des ions de cuivre, des ions d'argent, des ions de vanadium ou de vanadate, des ions de bismuth, des ions de magnésium, des ions de zinc, des ions de manganèse, des ions de cobalt, des ions de nickel, des ions d'étain, des acides carboxyliques aromatiques comprenant au moins deux groupes qui contiennent des atomes faisant office de donneurs, ou des dérivés d'acides carboxyliques de ce type, des particules d'acide silicique dont la granulométrie moyenne est inférieure à 1 µm ;
D) la surface métallique après son contact avec la solution aqueuse du fluorocomplexe et avant son enduction avec la peinture électrophorétique apte à une précipitation par voie cathodique, n'est pas séchée.

2. Procédé selon la revendication 1, **caractérisé en ce que** la solution aqueuse ne contient pas plus de 1 mg/l d'un autre polymère organique sous la forme d'un polymère qui ne présente pas de monomères d'allylamine ou de vinylamine et qui possède, à une concentration qui n'est pas supérieure à 50 g/l, des propriétés d'épaississement ou de mise en dispersion.

3. Procédé selon une des revendications précédentes ou les deux, **caractérisé en ce que** la solution aqueuse ne contient pas plus de 1 mg/l d'un polymère organique.

4. Procédé selon une ou plusieurs des revendications précédentes, **caractérisé en ce que** la solution aqueuse contient le fluorocomplexe en une quantité telle que la concentration de l'élément M se situe dans la plage de 1 à 5000 mg/l, de préférence dans la plage de 5 à 1000 mg/l et en particulier dans la plage de 10 à 500 mg/l.

5. Procédé selon la revendication 4, **caractérisé en ce que**, dans le fluorocomplexe, sont présents six ions fluor par ion de l'élément M, et **en ce que** la solution aqueuse contient en outre encore de 1 à 1000 mg/l d'ions de fluorure, qui ne sont pas liés à l'élément M.

6. Procédé selon une ou plusieurs des revendications précédentes, **caractérisé en ce que** l'acide carboxylique aromatique est choisi parmi des acides hydroxycarboxyliques, des acides aminocarboxyliques, des acides nitrocarboxyliques et des acides carboxyliques comprenant au moins deux groupes carboxyle, ou leurs dérivés, dans lequel la solution aqueuse contient de 0,1 à 1000 mg/l d'au moins un des acides carboxyliques aromatiques mentionnés ou de leurs dérivés.

7. Procédé selon une ou plusieurs des revendications précédentes, **caractérisé en ce que** la solution aqueuse contient de 10 à 500 mg/l de nitroguanidine et/ou de 0,1 à 5000 mg/l d'ions de nitrate.

8. Procédé selon une ou plusieurs des revendications précédentes, **caractérisé en ce que** la solution aqueuse contient de 0,1 à 300 mg/l, de préférence de 1 à 30 mg/l d'ions de cuivre et/ou d'argent.

9. Procédé selon une ou plusieurs des revendications précédentes, **caractérisé en ce que** la solution aqueuse contient de 10 à 1000 mg/l, de préférence de 50 à 500 mg/l de silicium sous la forme de particules d'acide silicique dont la granulométrie moyenne est inférieure à 1 µm.

10. Solution aqueuse acide exempte de chrome d'un fluorocomplexe d'au moins un élément M choisi parmi le groupe constitué de B, Si, Ti, Zr et Hf, dont la valeur de pH se situe dans la plage de 2 à 5,5, qui ne contient pas plus de 1 g/l de phosphates inorganiques ou d'acide phosphorique, calculés en tant que PO₄³⁻, pour le traitement de surfaces métalliques, **caractérisée en ce qu'**elle contient
a) un système de tampon pour la plage de pH de 2,5 à 5,5 ; et
b) en outre un ou plusieurs composants choisis parmi : des ions de
cuivre, des ions d'étain, des ions de bismuth, des acides carboxyliques aromatiques comprenant au moins deux groupes qui contiennent des atomes faisant office de donneurs, ou des dérivés d'acides carboxyliques de ce type, et du silicium à une teneur en polymère organique qui n'est pas supérieure à 1 mg/l sous la forme de particules d'acide silicique dont la granulométrie moyenne est inférieure à 1 µm.

11. Solution aqueuse selon la revendication 10, **caractérisée en ce qu'**elle contient une quantité de fluorocomplexe telle que la concentration de l'élément M se situe dans la plage de 1 à 5000 mg/l, de préférence dans la plage de 5 à 1000 mg/l, et en particulier la plage de 10 à 500 mg/l.

12. Solution aqueuse selon la revendication 11, **caractérisée en ce que**, dans le fluorocomplexe, sont présents six ions fluor par ion de l'élément M, et **en ce que** la solution aqueuse contient en outre encore de 1 à 1000 mg/l d'ions de fluorure, qui ne sont pas liés à l'élément M.

13. Solution aqueuse selon une ou plusieurs des revendications 10 à 12, **caractérisée en ce que** l'acide carboxylique aromatique est choisi parmi des acides hydroxycarboxyliques, des acides aminocarboxyliques, des acides nitrocarboxyliques et des acides carboxyliques comprenant au moins deux groupes carboxyle, ou leurs dérivés, la solution aqueuse contenant de 0,1 à 1000 mg/l d'au moins un des acides carboxyliques aromatiques mentionnés ou de leurs dérivés.

14. Solution aqueuse selon une ou plusieurs des revendications 10 à 13, **caractérisée en ce qu'**elle contient en outre de 10 à 500 mg/l de nitroguanidine et/ou de 0,1 à 5000 mg/l d'ions de nitrates.

15. Solution aqueuse selon une ou plusieurs des revendications 10 à 14, **caractérisée en ce qu'**elle contient de 0,1 à 300 mg/l, de préférence de 1 à 30 mg/l d'ions de cuivre et/ou d'argent.

16. Solution aqueuse selon une ou plusieurs des revendications 10 à 15, **caractérisée en ce qu'**elle ne contient pas plus de 1 mg/l de polymère organique.

17. Solution aqueuse selon la revendication 16, **caractérisée en ce qu'**elle contient de 10 à 1000 mg/l, de préférence de 50 à 500 mg/l du silicium mentionné sous la forme de particules d'acide silicique dont la granulométrie moyenne est inférieure à 1 µm.

18. Concentrat aqueux qui, lors de sa dilution avec de l'eau à concurrence d'un facteur entre 10 et 100 et du réglage en cas de nécessité de sa valeur du pH, procure une solution aqueuse selon une ou plusieurs des revendications 10 à 17.
